# EUROPEAN PATENT APPLICATION

(11) **EP 4 420 587 A1**
(43) Date of publication of application: **28.08.2024**
(21) Application number: 23183077.9
(22) Date of filing: 03.07.2023
(51) Int. Cl.: A47L 11/40

(54) **DEVICE BASE, WATER STORAGE DEVICE AND CLEANING ROBOT**

(30) Priority: 23.02.2023 CN 202310162169
(71) Applicant: Beijing Xiaomi Mobile Software Co., Ltd., Beijing 100085 (CN)
(72) Inventor: Kong, Peng, Beijing, 100085 (CN); Wang, Chengyang, Beijing, 100085 (CN)
(74) Representative: Gunzelmann, Rainer

(57) **Abstract**

A device base includes a housing having a first opening penetrating the housing; a first water tank; a water pump within the housing; a water passage opening on the housing; a first water pipe connecting the water passage opening with the water pump; a second water pipe connecting the water pump with the first water tank; a first infrared module within the housing, with its signal terminal facing the first opening and configured to transmit or receive an infrared signal that indicates a position of the device base or of a cleaning robot connected with the device base, to assist the device base in docking with the cleaning robot; and a first positioning member on the housing, configured to limit the cleaning robot when the device base is docked with the cleaning robot, and make a water injection port of the cleaning robot keep docked with the water passage opening.

## Description

### TECHNICAL FIELD

This application relates to the field of terminals, in particular to a device base, a water storage device, and a cleaning robot.

### BACKGROUND

In users' daily life, water storage devices such as humidifiers and intelligent watering devices are often used. At present, these devices require users to manually add water and pour water, or empty a reservoir, which may be inconvenient for a variety of reasons, and also is not fully automatic.

### SUMMARY

The present invention provides a device base, a water storage device, and a cleaning robot, to solve the problems in the related art.

According to a first aspect of embodiments of the present invention, there is provided a device base that is configured to be assembled with a principal machine, to obtain a water storage device that is switchable to a working state. The device base includes: a housing having a first opening penetrating the housing in an inner-outer direction; a first water tank; a water pump within the housing; a water passage opening on the housing; a first water pipe connecting the water passage opening with the water pump; a second water pipe connecting the water pump with the first water tank; a first infrared module within the housing, a signal terminal of the first infrared module facing the first opening, and the first infrared module being configured to transmit or receive an infrared signal that indicates a position of the device base or a position of a cleaning robot connected with the device base, to assist the device base in docking with the cleaning robot; and a first positioning member on the housing, the first positioning member being configured to limit the position of the cleaning robot when the device base is docked with the cleaning robot, and make a water injection port of the cleaning robot keep docked with the water passage opening.

In some embodiments, the water passage opening is a second opening penetrating the housing.

In some embodiments, the housing includes a third opening penetrating the housing; the device base further includes a water passage member arranged in and passing through the third opening, the water passage member being connected with the first water pipe and partially located outside the housing, and the water passage opening being formed in the water passage member.

In some embodiments, the water passage member includes a plastic water passage member.

In some embodiments, the first positioning member includes a tapered positioning post or a tapered positioning hole, and the tapered positioning post or the tapered positioning hole is connected to the cleaning robot and limits the position of the cleaning robot.

In some embodiments, the first positioning member further includes a magnet; the magnet is at an end of the tapered positioning post away from a surface of the housing or at a bottom of the tapered positioning hole; and the magnet is configured to trigger a metal elastic sheet of the cleaning robot.

In some embodiments, the device base includes an even number of first positioning members arranged symmetrically with respect to the water passage opening on the housing.

In some embodiments, the device base further includes: a switch valve in a water circuit connected with the first water tank, the switch valve being configured to control conduction or disconnection of a water circuit between the device base and the principal machine; and a connector configured to be connected with a corresponding connector of the principal machine, to control conduction or disconnection of an electric circuit between the device base and the principal machine.

In some embodiments, the water pump includes a water inlet pump, a water outlet pump or a multifunctional pump.

In some embodiments, the first opening is on a peripheral surface of the housing.

According to a second aspect of embodiments of the present invention, there is provided a water storage device. The water storage device includes: a principal machine; and the device base according to any one of the above embodiments. The device base is assembled with the principal machine, a water circuit of the device base being connected with a water circuit of the principal machine.

In some embodiments, the water storage device includes an air humidifier, a dehumidifier, or an intelligent watering flowerpot.

According to a third aspect of embodiments of the present invention, there is provided a cleaning robot configured to interact with the device base described in any of the above embodiments. The cleaning robot includes: a second infrared module configured to transmit or receive an infrared signal that indicates a position of the cleaning robot or a position of the device base connected with the cleaning robot, to assist the cleaning robot in docking with the device base; a panel including a panel body, a water injection port, and a second positioning member, wherein the water injection port is on the panel body and is configured to cooperate with the water passage opening, and the second positioning member is connected with the panel and configured to cooperate with the first positioning member to realize position limitation; and a second water tank connected with the water injection port.

In some embodiments, the water injection port includes: an accommodating groove recessed inwards from a surface of the panel body; and a water injection hole penetrating the panel body and connected with the accommodating groove, the water injection hole being configured to be connected with the water passage opening.

In some embodiments, the second positioning member includes: a tapered positioning post or a tapered positioning hole, wherein the tapered positioning post or the tapered positioning hole is connected with the base device and limits the position of the device base; and a metal elastic sheet at an end of the positioning post away from a surface of the panel or at a bottom of the tapered positioning hole.

The technical solutions of the embodiments of the present invention have the following beneficial effects.

As known from the above embodiments, the device base in the present invention can be docked with the cleaning robot, and automatic water filling or water pouring can be realized by conduction of water circuits, to adjust a liquid level in the first water tank, which is beneficial to improving the intelligence degree of any apparatus equipped with the device base and achieves a fully automatic mode of the apparatus.

It should be understood that both the foregoing general description and the following detailed description are merely exemplary and explanatory and are not restrictive of the present invention.

### BRIEF DESCRIPTION OF DRAWINGS

The accompanying drawings, which are incorporated into and constitute a part of the specification, illustrate embodiments consistent with the present invention and, together with the specification, serve to explain principles of the present invention.
Fig. 1 is a schematic view of a device base according to an embodiment.
Fig. 2 is a partial schematic view of the device base in Fig. 1.
Fig. 3 is a schematic view showing a device base assembled with a principal machine according to an embodiment.
Fig. 4 is a schematic view of a water storage device according to an embodiment.
Fig. 5 is a schematic view showing a device base docked with a cleaning robot according to an embodiment.
Fig. 6 is a block diagram showing a partial structure of a cleaning robot according to an embodiment.
Fig. 7 is a schematic view of a panel of a cleaning robot according to an embodiment.

### DETAILED DESCRIPTION

Embodiments will be described in detail herein, examples of which are shown in the accompanying drawings. When the following description refers to the drawings, unless otherwise indicated, the same numbers in different drawings indicate the same or similar elements. The implementations described in the following embodiments do not represent all the implementations consistent with the present invention. Rather, they are merely examples of devices and methods consistent with some aspects of the present invention as recited in the appended claims.

Terms in the present invention are merely intended to describe specific embodiments, rather than limit the present invention. Terms "a", "said" and "the" in singular forms used in the present invention and the appended claims are intended to include plural forms, unless clearly indicated otherwise in the context. It should also be understood that the term "and/or" as used herein refers to and includes any or all possible combinations of one or more associated listed items.

It should be understood that although terms such as "first", "second" and "third" may be used to describe various information in the present invention, the information should not be limited to these terms. These terms are only used to distinguish the same type of information from each other. For example, without departing from the scope of the present invention, first information may also be called second information, and similarly, the second information may also be called the first information. Depending on the context, the word "if' as used herein can be interpreted as "when" or "at the time of" or "in response to determining".

The present invention provides a device base. Through interaction between the device base and a cleaning robot, the device base can pump water from the cleaning robot or pump water out of the device base, and functions of automatically adding water and pouring water can be realized, which can improve the intelligence degree of any machine equipped with the device base.

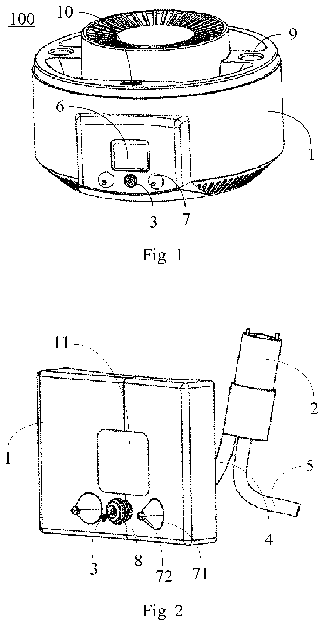

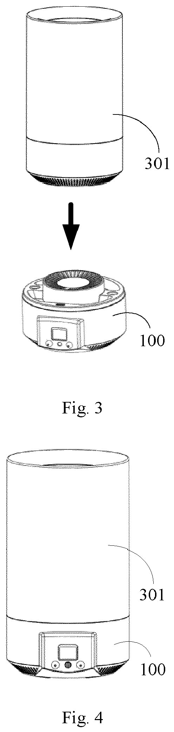

Specifically, Fig. 1 is a schematic view of a device base 100 according to an embodiment; Fig. 2 is a partial schematic view of the device base 100 in Fig. 1; and Fig. 3 is a schematic view showing that a device base is assembled with a principal machine according to an embodiment. As shown in Figs. 1-3, the device base 100 includes a housing 1, a first water tank (not shown), a water pump 2, a water passage opening 3, a first water pipe 4, a second water pipe 5, a first infrared module 6 and a first positioning member 7. The housing 1 includes a first opening 11 penetrating the housing 1 in an inner-outer direction. The first water tank may be a local space surrounded by the housing 1, or the first water tank may be a water tank independent of the housing 1 and arranged in the housing 1, which will not be limited by the present invention. The water pump 2 is arranged in the housing 1, and includes a water inlet pump, a water outlet pump or a multifunctional pump. The first water pipe 4 is connected with the water pump 2 and the water passage opening 3, and the second water pipe 5 is connected with the water pump 2 and the first water tank, so that liquid passing through the water passage opening 3 can be pumped into the first water tank by the water pump 2, or liquid in the first water tank can be pumped out of the device base 100 by the water pump 2, which can be designed as required and will not be limited by the present invention. The housing 1 may be an integrated housing, and has a hollow area in a center of the housing. In other embodiments, the housing 1 includes a main body part and a panel part, and the panel part and the main body part are connected and cooperate with each other to surround the central hollow area of the housing 1. The water passage opening 3, the first infrared module 6, and the first positioning member can all be arranged on the panel part, which can be specifically designed as required and will not be limited by the present invention.

The water passage opening 3 is arranged on the housing 1. In some embodiments, the water passage opening 3 is a second opening penetrating the housing 1 in the inner-outer direction. In other embodiments as provided by the present invention, the housing 1 includes a third opening penetrating through the housing 1. The device base 100 also includes a water passage member 8 that is arranged in and passes through the third opening and connected with the first water pipe 4. The water passage opening 3 is formed on the water passage member 8. After the water passage member 8 is connected with the first water pipe 4, the water passage opening 3 is also in connection with the first water pipe 4, to make a water circuit smooth. Compared with a scheme that the water passage opening 3 is directly formed on the housing 1, the scheme of adopting the water passage member 8 is more conducive to the tightness of the connection between the water passage member 8 and the first water pipe 4, since the water passage member 8 is separately molded.

The first infrared module 6 is arranged in the housing 1, and a signal terminal of the first infrared module 6 is oriented towards the first opening 11. For the sake of aesthetics, an aesthetic member is arranged on the housing 1 to cover the first opening 11. The signal terminal of the first infrared module 6 may also partially extend into the first opening 11, which will not be limited by the present invention. As an example where the signal terminal is a transmitting terminal, in a working process, the first infrared module 6 transmits an infrared signal outwards through the first opening 11, which can indicate a position of the device base to the cleaning robot; subsequently, the cleaning robot moves towards the device base 100 according to the received infrared signal, which helps the cleaning robot to dock with the device base 100. As an example where the signal terminal is a receiving terminal, in a working process, the first infrared module 6 receives an infrared signal through the first opening 11, and the infrared signal can be received by the device base 100; a position of the cleaning robot can be obtained according to an indication of the infrared signal, and accordingly the device base can move towards the cleaning robot and dock with the cleaning robot with the assistance of the infrared signal. In some embodiments, in the process of docking the cleaning robot with the device base 100, the entire docking process can be realized through the indication of the infrared signal transmitted by the first infrared module 6. In other embodiments, it is also possible to first send approximate position information to the cleaning robot or the device base through a third-party device, which may be an intelligent voice robot or a smart phone, and then obtain a precise position through the indication of the infrared signal transmitted by the first infrared module 6 in a subsequent docking process, achieving the docking.

The first positioning member 7 is arranged on the housing 1 and limits the position of the cleaning robot when the device base 100 is docked with the cleaning robot, so that a water injection port of the cleaning robot keeps docked with the water passage opening 3, and water in the first water tank of the device base 100 can be injected into the cleaning robot through the water passage opening 3 and the water injection port, realizing automatic water pouring. Alternatively, water in the cleaning robot can be pumped into the first water tank of the device base 100 through the water injection port and the water passage opening, realizing automatic water filling. In such a way, the intelligence degree of the machine can be improved. The device base 100 includes an even number of the first positioning members 7 arranged symmetrically with respect to the water passage opening 3. For example, in the embodiments of the present invention, the device base 100 includes two first positioning members 7, which are symmetrically arranged, and the water passage opening 3 is arranged between the two first positioning members 7. On this basis, through cooperation between the two first positioning members 7 arranged symmetrically and a second positioning member of the cleaning robot, the uniformity of the connection between the water passage opening 3 and the water injection port of the cleaning robot can be improved, and water leakage caused by an excessively large local clearance can be avoided.

In the above embodiments, as shown in Figs. 3 and 4, the device base 100 is assembled with a principal machine 301 to obtain a water storage device that is switchable to a working state, and the principal machine 301 is coupled to an external power supply through the device base 100. In other words, the principal machine 301 cannot realize the function of the water storage device when it is independent of the device base 100. Specifically, the device base 100 needs to be assembled with the principal machine 301, and only after the assembly, water circuits and electric circuits between the device base 100 and the principal machine 301 are all connected and enabled, and the water storage device has the function of switching to the working state.

For example, the water storage device includes an air humidifier. When a principal machine of the humidifier is separated from the device base 100, the principal machine of the humidifier cannot work since there is no water source. After the principal machine of the air humidifier is assembled with the device base 100, water circuits become conducted, and a water tank in the device base 100 serves as a water source, so that the humidifier can atomize liquid and output it to realize corresponding functions. The water storage device is exemplified as the air humidifier herein. In other embodiments, the water storage device may also include a dehumidifier or an intelligent watering flowerpot, which will not be limited by the present invention.

In the above embodiments, the principal machine of the air humidifier, dehumidifier and intelligent watering flowerpot is used in conjunction with the device base 100, for example. In other embodiments, in order to reduce purchasing costs of users, the principal machine can be compatible with ordinary bases.

Since the device base 100 needs to be assembled with the corresponding principal machine 301, to conduct water circuits and electric circuits, the device base 100 also includes a switch valve 9 and a connector 10. When the device base 100 is assembled with the principal machine, components on the principal machine can push and open the switch valve 9, to connect a water circuit of the principal machine and a water circuit of the device base 100, so that liquid in the first water tank can enter the water circuit of the principal machine, performing corresponding operations. When the device base 100 is assembled with the principal machine, a connector of the principal machine is inserted into the connector 10 of the device base 100, to make an electric circuit between the principal machine and the device base 100 conducted.

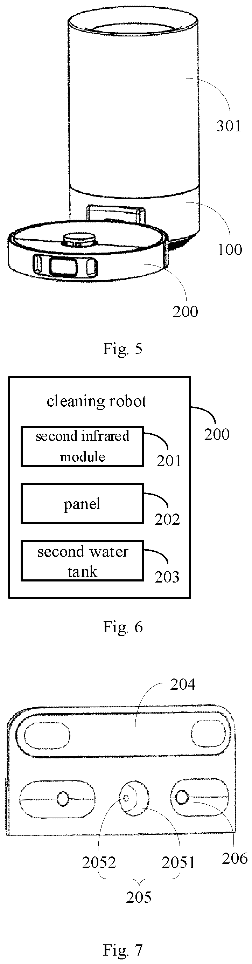

The cleaning robot docked with the device base 100 can interact with the device base 100. The cleaning robot is a cleaning robot 200 and includes a water tank for storing liquid. For example, the cleaning robot includes a sweeper. Since the sweeper can realize a cleaning function independently from a base station, the base station is different from the device base provided in the present invention. Fig. 5 is a schematic view showing interaction between the water storage device, which is obtained by assembling the principal machine 301 with the device base 100 and hence can work normally, and the cleaning robot 200. Through the interaction between the cleaning robot 200 and the device base 100, water can be automatically added into and poured out of the water storage device, and the intelligent level of the water storage device is improved.

Specifically, Fig. 6 is a block diagram showing a partial structure of the cleaning robot 200, and Fig. 7 is a schematic view of a panel 202 of the cleaning robot 200. The cleaning robot 200 includes a second infrared module 201, the panel 202 and a second water tank 203. The second infrared module 201 is used to transmit or receive an infrared signal. Specifically, when one of the second infrared module 201 and the first infrared module 6 transmits an infrared signal, the other thereof receives the infrared signal, which can be designed as required. The panel 202 includes a panel body 204, a water injection port 205, and a second positioning member 206. The water injection port 205 is on the panel body 204. The second positioning member 206 is connected with the panel body 204 and cooperates with the first positioning member 7 to realize position limitation. The second water tank 203 is connected with the water injection port 205.

As an example where the water storage device equipped with the device base 100 is an air humidifier, the cleaning robot 200 is a sweeper, and the first infrared module 6 of the air humidifier is a transmitting module, in a process of docking the sweeper with the air humidifier, the first infrared module 6 transmits an infrared signal outwards; the sweeper moves towards the air humidifier based on indication of the infrared signal after receiving the infrared signal; the first positioning member 7 is docked with the second positioning member 206, and the water injection port 205 is docked with the water passage opening 3 at the same time. After the docking process is completed, a water pump of the air humidifier is started, and at this time, the water pump is a water inlet pump, so that water can be pumped from the sweeper through the water passage opening 3 and the water injection port 205 and added into the first water tank, to realize automatic water filling. In other embodiments, the first infrared module 6 is a transmitting module, the second infrared module 201 equipped in the sweeper is a receiving module, and then the air humidifier can move towards the sweeper to realize docking.

In other embodiments related to interaction, for example, the water storage device equipped with the device base 100 is a dehumidifier, the cleaning robot 200 is a sweeper, and the first infrared module 6 equipped in the dehumidifier is a transmitting module. In a docking process of the sweeper, the first infrared module 6 transmits an infrared signal outwards; the sweeper moves towards the dehumidifier based on indication of the infrared signal after receiving the infrared signal; the first positioning member 7 is docked with the second positioning member 206, and the water injection port 205 is docked with the water passage opening 3 at the same time. After the docking process is completed, a water pump of the dehumidifier is started, and at this time, the water pump is a water outlet pump, so that liquid in the dehumidifier can be output to the sweeper through the water passage opening 3 and the water injection port 205, and the water can be poured through the sweeper to realize automatic water pouring. In other embodiments, the first infrared module 6 is a transmitting module, the second infrared module 201 equipped in the sweeper is a receiving module, and then the dehumidifier can move towards the sweeper to realize docking. In the above embodiments, the air humidifier and the water inlet pump thereof, as well as the dehumidifier and the water outlet pump thereof are exemplified. In other embodiments, the water pump can be selectively configured as a water inlet pump, a water outlet pump or a multifunctional pump according to the function of the water storage device, which will not be limited by the present invention.

In the cleaning robot, the water injection port 205 includes an accommodating groove 2051 and a water injection hole 2052. The accommodating groove 2051 is recessed inwards from a surface of the panel body 204, and the water injection hole 2052 penetrates the panel body 204 and is connected with the accommodating groove 2051. The water injection hole 2052 is connected with the water passage opening 3 when the cleaning robot 200 is docked with the device base 100. Therefore, by arranging the accommodating groove 2051, the water passage opening 3 on the device base 100 can partially protrude from the housing and extend into the accommodating groove 2051, which helps to improve the stability of the connection between the water injection port 205 and the water passage opening 3. Especially, when the device base 100 includes the water passage member 8 that is a plastic water passage member, the plastic water passage member is in interference fit with the accommodating groove 2051, so that the tightness can be improved and water leakage can be prevented.

In the above embodiments, the first positioning member 7 includes a tapered positioning post 71, and the second positioning member 206 includes a tapered positioning hole. In the process of docking the cleaning robot 200 with the device base, the tapered positioning post can gradually slide into the tapered positioning hole, playing a dual role of guiding and limiting. Further, the first positioning member 7 also includes a magnet 72 at an end of the tapered positioning post 71 away from a surface of the housing 1, and the second positioning member 206 includes a metal elastic sheet at a bottom of the tapered positioning hole. After the tapered positioning post 71 and the tapered positioning hole are fitted in place, the magnet 72 triggers the metal elastic sheet, so that the cleaning robot 200 sends a signal to the device base 100 after detecting that the metal elastic sheet is triggered, and the device base 100 starts the water pump 2 accordingly, to perform automatic water filling or water pouring.

In other embodiments, the first positioning member 7 includes a tapered positioning hole and the second positioning member 206 includes a tapered positioning post, in which case the guiding and positioning can also be realized in the docking process. Similarly, a metal elastic sheet is arranged at the bottom of the tapered positioning hole, and a magnet is arranged at an end of the tapered positioning post away from the panel body 204. After the cleaning robot 200 is docked with the device base 100, the metal elastic sheet is triggered by the magnet, and accordingly the device base 100 starts the water pump 2 to perform automatic water filling or water pouring, adjusting a liquid level in the first water tank.

Regarding the turn on and turn off of the water pump 2, the device base 100 may further include a control component, which may be electrically connected with the water pump. The control component may control the water pump 2 to be turned on when the device base 100 receives a signal that the metal elastic sheet is triggered, and control the water pump 2 to be turned off when the metal elastic sheet is disconnected.

After considering the specification and practicing the present invention, those skilled in the art will easily come up with other implementations of the present invention. The present invention aims to cover any variations, usages, or adaptive changes, which follow the general principles of the present invention and include common knowledge or conventional technical means in the art that are not revealed in the present invention. The specification and embodiments are only exemplary, and the true scope of the present invention are defined by the appended claims.

It should be understood that the present invention is not limited to the precise structures described above and shown in the accompanying drawings, and various modifications and changes can be made without departing from the scope. The scope of the present invention is limited only by the appended claims.

## Claims

1. A device base (100), configured to be assembled with a principal machine (301) to obtain a water storage device that is switchable to a working state, wherein the device base (100) comprises:
a housing (1) having a first opening (11) penetrating the housing (1) in an inner-outer direction;
a first water tank;
a water pump (2) within the housing (1);
a water passage opening (3) on the housing (1);
a first water pipe (4) connecting the water passage opening (3) with the water pump (2);
a second water pipe (5) connecting the water pump (2) with the first water tank;
a first infrared module (6) within the housing (1), a signal terminal of the first infrared module (6) facing the first opening (11), and the first infrared module (6) being configured to transmit or receive an infrared signal that indicates a position of the device base (100) or a position of a cleaning robot (200) connected with the device base (100), to assist the device base (100) in docking with the cleaning robot (200); and
a first positioning member (7) on the housing (1), the first positioning member (7) being configured to limit the position of the cleaning robot (200) when the device base (100) is docked with the cleaning robot (200), and make a water injection port of the cleaning robot (200) keep docked with the water passage opening (3).

2. The device base (100) according to claim 1, wherein the water passage opening (3) is a second opening penetrating the housing (1).

3. The device base (100) according to claim 1 or 2, wherein:
the housing (1) comprises a third opening penetrating the housing (1);
the device base (100) further comprises a water passage member (8) arranged in and passing through the third opening, the water passage member (8) being connected with the first water pipe (4) and partially located outside the housing (1), and the water passage opening (3) being formed in the water passage member (8).

4. The device base (100) according to claim 3, wherein the water passage member (8) comprises a plastic water passage member.

5. The device base (100) according to any one of claims 1 to 4, wherein the first positioning member (7) comprises a tapered positioning post (71) or a tapered positioning hole, and the tapered positioning post (71) or the tapered positioning hole is connected to the cleaning robot (200) and limits the position of the cleaning robot (200).

6. The device base (100) according to claim 5, wherein the first positioning member (7) further comprises a magnet (72); the magnet (72) is at an end of the tapered positioning post (71) away from a surface of the housing (1) or at a bottom of the tapered positioning hole; and the magnet (72) is configured to trigger a metal elastic sheet of the cleaning robot (200).

7. The device base (100) according to any one of claims 1 to 6, wherein the device base (100) comprises an even number of first positioning members (7) arranged symmetrically with respect to the water passage opening (3) on the housing (1).

8. The device base (100) according to any one of claims 1 to 7, further comprising:
a switch valve (9) in a water circuit connected with the first water tank, the switch valve (9) being configured to control conduction or disconnection of a water circuit between the device base (100) and the principal machine (301); and
a connector (10) configured to be connected with a corresponding connector of the principal machine (301), to control conduction or disconnection of an electric circuit between the device base (100) and the principal machine (301).

9. The device base (100) according to any one of claims 1 to 8, wherein the water pump (2) comprises a water inlet pump, a water outlet pump or a multifunctional pump.

10. The device base (100) according to any one of claims 1 to 9, wherein the first opening (11) is on a peripheral surface of the housing (1).

11. A water storage device comprises:
a principal machine (301); and
the device base (100) according to any one of claims 1 to 10, assembled with the principal machine (301), a water circuit of the device base (100) being connected with a water circuit of the principal machine (301).

12. The water storage device according to claim 11, comprising an air humidifier, a dehumidifier, or an intelligent watering flowerpot.

13. A cleaning robot (200), configured to interact with the device base (100) according to any one of claims 1 to 10, wherein the cleaning robot (200) comprises:
a second infrared module (201) configured to transmit or receive an infrared signal that indicates a position of the cleaning robot (200) or a position of the device base (100) connected with the cleaning robot (200), to assist the cleaning robot (200) in docking with the device base (100);
a panel (202) comprising a panel body (204), a water injection port (205), and a second positioning member (206), wherein the water injection port (205) is on the panel body (204) and is configured to cooperate with the water passage opening (3), and the second positioning member (206) is connected with the panel (202) and configured to cooperate with the first positioning member (7) to realize position limitation; and
a second water tank (203) connected with the water injection port (205).

14. The cleaning robot (200) according to claim 13, wherein the water injection port (205) comprises:
an accommodating groove (2051) recessed inwards from a surface of the panel body (204); and
a water injection hole (2052) penetrating the panel body (204) and connected with the accommodating groove (2051), the water injection hole (2052) being configured to be connected with the water passage opening (3).

15. The cleaning robot (200) according to claim 13 or 14, wherein the second positioning member (206) comprises:
a tapered positioning post (71) or a tapered positioning hole, wherein the tapered positioning post (71) or the tapered positioning hole is connected with the base device and limits the position of the device base (100); and
a metal elastic sheet at an end of the positioning post away from a surface of the panel (202) or at a bottom of the tapered positioning hole.
